# EUROPEAN PATENT SPECIFICATION

(11) **EP 1 683 675 B1**
(45) Date of publication and mention of the grant of the patent: **09.07.2008**
(21) Application number: 06100482.6
(22) Date of filing: 17.01.2006
(51) Int. Cl.: B60K 31/04

(54) **Cruise management method and device for a road vehicle**
Verfahren und Vorrichtung eines Geschwindigkeitsregelsystems für ein Straßenfahrzeug
Méthode et dispositif du régulateur de vitesse pour un véhicule terrestre

(30) Priority: 19.01.2005 IT BO20050025
(43) Date of publication of application: 26.07.2006
(73) Proprietor: MAGNETI MARELLI POWERTRAIN S.p.A., 20011 Corbetta (IT)
(72) Inventor: Lupo, Savino Luigi, 40127 Bologna (IT)
(74) Representative: Jorio, Paolo

(56) References cited:
- DE-A1- 4 301 292
- DE-C1- 4 425 957
- US-A- 6 098 007
- US-B1- 6 295 500

## Description

The present invention relates to a cruise management method and device for a road vehicle.

The accelerator is conventionally directly mechanically connected to the carburettor or the injection control system by a cable; in this case, the driver has full control over the drive torque generated by the engine and therefore over the speed of the vehicle.

The system known as "drive by wire" has recently been proposed, in which the accelerator is connected to a position sensor which reads the position of the accelerator pedal and transmits it to a control unit which manages the drive torque generated by the engine and therefore the speed of the vehicle both as a function of the wishes that the driver expresses by acting on the accelerator pedal, and as a function of parameters depending essentially on the safety of the vehicle (for instance anti-skid and stability control). In other words, when the "drive by wire" system is used, the driver no longer has full control over the drive torque generated by the engine and therefore over the vehicle speed, but the wishes that the driver expresses by acting on the accelerator pedal are always filtered by a control unit as a function of the safety of the vehicle.

Following the introduction of "drive by wire" systems, various control methods have been proposed with a view to optimising the management of the drive torque generated by the engine and therefore of the vehicle speed; moreover, when there is an automatic gear change or a servo-assisted gear change, these control methods have to integrate the management of the drive torque generated by the engine with the choice of the optimum transmission ratio.

An example is disclosed in US Patent Specification 6 819 996 B2 which discloses a control method for a road vehicle, in which the best combination of the speed of rotation of the engine and the transmission ratio of the gear change is calculated as a function of the current speed of the vehicle in order to minimise fuel consumption. A further example is disclosed in German Patent Application DE 1 025 1653 A which discloses a control method for a road vehicle in which the speed of the vehicle is reduced by shifting down the gears rather than by actuating the brakes.

However, the control methods currently available have some drawbacks as the wishes that the driver expresses by acting on the accelerator pedal are not always interpreted correctly; moreover, adequate account is not always taken of the dynamic effect due to the road load (due, for instance, to the positive or negative gradient of the road or the presence of wind) with the result that an inappropriate transmission ratio may be selected.

DE4425957A1 discloses a motor vehicle cruise control device, in which data is fed to the input side of an artificial neuronal network contained in a speed-regulator covering the momentary discrepancy between the desired and actual speeds, and also on the travel state.

DE4301292A1 disclose a fully hand-operated automatic car, in which the operation of the automatic car uses an EM actuator for the throttle valve of the engine; a microprocessor stores a speed set point for comparison with actual speed and a three-digit display shows the speed. A sensor measures the actual speed. And pressure pads in the steering wheel increment the set point, the new value also being shown on the display.

DE10157255A1 discloses a method for improved interaction between driver demand, cruise control system and traction control system in an internal combustion vehicle; the desired engine output torque is adjusted based on the above inputs and vehicle operating conditions.

EP0983894A1 discloses a vehicle speed control system activated so as to control the vehicle speed in a modified way in response to the driver's inputs. When activated, the accelerator position defines a target speed so as to control the vehicle speed to the target speed.

US6104976A1 discloses a vehicle speed control system comprising a section for calculating a command driving force-required to make a sensed vehicle speed equal to a preset command vehicle speed, a section for calculating a command engine output in accordance with the command driving force and the command vehicle speed, a section for calculating a command engine speed corresponding to the command engine output from a predetermined engine torque-versus-speed characteristic relationship in an engine constraint state of minimum throttle setting and fuel cutoff inhibition when the command driving force is negative, and a section for calculating a command transmission ratio in accordance with the command engine speed.

US6178371A1 discloses a speed control method for vehicles having an internal combustion engine and which smoothly controls engine torque to control vehicle speed.

US2003176256A1 discloses a power output apparatus and movable body with power output apparatus mounted thereon; the technique of the invention sets a relationship between the throttle opening (corresponding to the accelerator opening), the vehicle speed, and the target torque of a drive shaft, so as to enable a greater braking torque to be output in a working status of a cruise control system than a braking torque, which is output to the drive shaft in a full closed position of the accelerator opening in a non-working status of the cruise control system.

US6098007 (including the features of preamble of claim 1) discloses a control arrangement for longitudinal dynamics of a motor vehicle; the invention provides a method and apparatus for controlling the longitudinal dynamics of a motor vehicle, in which, as control output signal, at least one drive train actuating signal is generated as a function of input data comprising the current driving state of the vehicle, and the desired longitudinal speed or the desired longitudinal acceleration. Using these input data, controller-internal values for the desired longitudinal speed and the desired longitudinal acceleration are determined, and the drive train actuating signal is ascertained therefrom using an inverse vehicle longitudinal dynamics model to take into account the non-linear dynamics of vehicle behaviour, which is particularly relevant in the low driving speed range.

The object of the present invention is to provide a cruise management method and device for a road vehicle which are free from the drawbacks described above and which are also easy and economic to implement.

The present invention relates to a cruise management method and device for a road vehicle as recited in the accompanying claims.

The present invention will now be described with reference to the accompanying drawings, which show a non-limiting embodiment thereof, and in which:
Fig. 1 is a diagrammatic view of an automobile vehicle provided with a cruise management device in accordance with the present invention;
Fig. 2 is a diagram of the control implemented by the cruise management device of Fig. 1;
Fig. 3 is a diagrammatic view of a dashboard of the automobile vehicle of Fig. 1.

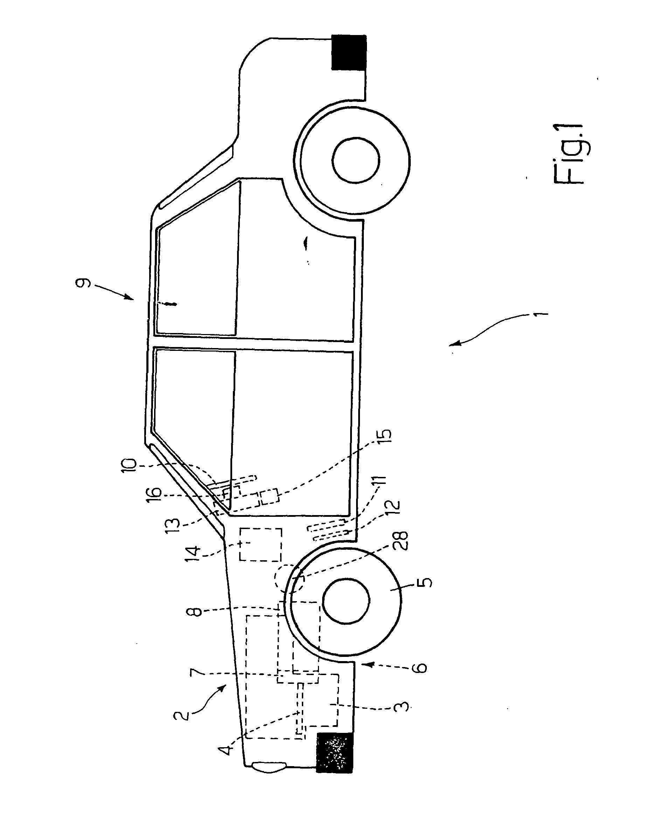

In Fig. 1, an automobile vehicle is shown overall by 1 and comprises an engine space 2 disposed in a front position and housing an internal combustion engine 3. The internal combustion engine 3 comprises a drive shaft 4 which transmits movement to the front drive wheels 5 via a transmission 6. The transmission 6 comprises a servo-assisted clutch 7 interposed between the drive shaft 4 and a servo-assisted gear change 8 which has an output permanently connected to the front wheels 5 via the interposition of a differential (not shown) and a pair of axle shafts (not shown).

The automobile vehicle 1 further comprises a passenger space 9 provided with a front seat for the driver and a steering wheel 10, an accelerator control 11 (in particular an accelerator pedal 11), a brake control 12 (in particular a brake pedal 12) and a dashboard 13 comprising a plurality of instruments and push button/switch controls (not shown in detail).

According to a preferred embodiment, the servo-assisted gear change 8 may operate either in a fully automatic way, in which the gears are automatically selected with no intervention by the driver, except for selection of the reverse gear, or in a manual way in which the driver requests a gear change by means of a pair of levers (not shown in detail) disposed at the location of the steering wheel 10.

The accelerator pedal 11 is provided with a position sensor (not shown) which is adapted to calculate, in real time, the position of the accelerator pedal 11 and to translate this position into an electric signal of analogue or digital type. The brake pedal 12 is also provided with a position sensor (not shown) which is adapted to calculate, in real time, the position of the brake pedal 12 and to translate this position into an electrical signal of analogue or digital type.

A control unit 14 is installed on board the automobile vehicle 1 and is adapted to receive as input the electrical signals indicating the position of the accelerator pedal 11 and the brake pedal 12 in order to manage both the internal combustion engine 3 and the servo-assisted clutch 7 and gear change 8. As a function of the position of the accelerator pedal 11 and the brake pedal 12, the control unit 14 in particular tries to interpret the speed wishes of the driver, i.e. it tries to interpret what speed of forward movement of the automobile vehicle 1 the driver is trying to achieve or desired speed DS, and then tries to apply this desired speed, i.e. it tries to manage the internal combustion engine 3 and the servo-assisted gear change 8 to bring the automobile vehicle 1 to the desired speed DS in the smallest possible time compatible with safety requirements, comfort and energy saving.

According to a preferred embodiment, the dashboard 13 is also provided with a cruise control device 15 which may be used by the driver as an alternative to the accelerator pedal 11 and enables the driver to input a desired speed DS which is maintained without any action on the accelerator pedal 11.

The dashboard 13 further comprises a screen 16 which is piloted by the control unit 14 in order to display, in real time, the desired speed DS interpreted by the control unit 14. In other words, as a function of the position of the accelerator pedal 11 and the brake pedal 12, the control unit 14 tries to interpret the speed desired by the driver by calculating a desired speed DS which is used to control the drive torque generated by the internal combustion engine 3; this desired speed DS is also displayed on the screen 16 so that the driver is aware of the final effect of the commands that he has imparted to the accelerator pedal 11 and the brake pedal 12.

According to a further embodiment (not shown), the control unit 14 merely interprets the speed desired by the driver by calculating the desired speed DS and displays this desired speed DS on the screen 16; however, this desired speed DS is not used in any way by the control unit 14 to manage the internal combustion engine 3 and the servo-assisted gear change 8 and is merely a forecast of the final effect of the commands imparted by the driver.

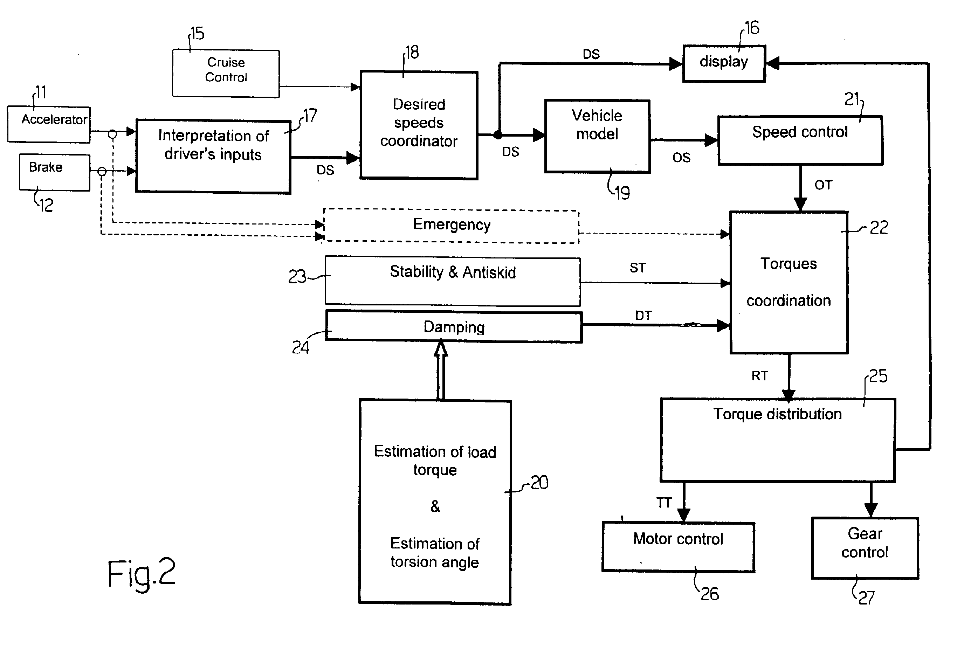

Fig. 2 shows a diagram of the control implemented by the control unit 14.

As shown in Fig. 2, the position signals from the accelerator pedal 11 and the brake pedal 12 are supplied to an interpretation block 17 which is adapted to interpret the speed desired by the driver. In the interpretation block 17, the desired speed DS is calculated as a function of the position of the accelerator pedal 11, the position of the brake pedal 12, the current speed CS of the vehicle 1 and the current transmission ratio (i.e. the gear engaged in the gear change 8). The desired speed DS is in particular between zero and the maximum value that the vehicle 1 can achieve and is always positive (even when reverse gear is engaged in the gear change 8); moreover, the desired speed DS is increasing with respect to the position of the accelerator pedal 11 and decreasing with respect to the position of the brake pedal 12.

According to a preferred embodiment, the desired speed DS is calculated by algebraically combining (in particular adding) the current speed CS with a correction factor determined as a function of the position of the accelerator pedal 11, the position of the brake pedal 12, and the current transmission ratio.

According to an embodiment, the position of the brake pedal 12 is expressed solely by a Boolean signal which assumes only a first value corresponding to a brake pedal 12 which is not depressed and a second value corresponding to a brake pedal 12 which is depressed.

The desired speed DS calculated by the interpretation block 17 is supplied to a coordinator 18 together with a speed signal generated by the cruise control device 15. The speed signal generated by the cruise control device 15 is always zero unless the driver has expressly actuated the cruise control device 15. The coordinator 18 decides whether to use the desired speed DS calculated by the interpretation block 17 or whether to use the speed signal generated by the cruise control device 15. In a preferred embodiment, the coordinator 18 applies only a maximum function and supplies as output the highest value among the desired speed DS calculated by the interpretation block 17 and the speed signal generated by the cruise control device 15.

The coordinator 18 supplies the desired speed value DS both to the screen 16 which merely displays the value of the desired speed DS and to a simulation block 19 which calculates a time evolution of an objective speed OS in order to being the current speed CS into line with the desired speed DS.

According to a preferred embodiment, the screen 16 is provided with a filter of low-pass type in order to subject the desired speed DS to filtering of the low-pass type before the display in order to avoid an overly rapid variation of what is displayed.

The time evolution of the objective speed OS is calculated by using a dynamic model of the vehicle 1 which represents only the longitudinal movement of the vehicle 1 and receives as input the desired speed DS, the current speed CS of the vehicle 1, the current transmission ratio, an estimate of the resistant load at the wheels, the minimum torque that can be actuated at the drive wheels 5 and the maximum torque that can be actuated at the drive wheels 5. The maximum and minimum torques that can be actuated at the drive wheels 5 are calculated as a function of the current transmission ratio, as a function of the maximum and minimum torque values that can be supplied by the internal combustion engine 3 and as a function of an estimate of the torque losses brought about by the transmission 6.

It will be appreciated that the objective speed OS always varies coherently with the variation of the desired speed DS so that when the desired speed DS is increasing, the objective speed OS is also increasing and when the desired speed DS is decreasing, the objective speed OS is also decreasing. It will also be appreciated that the objective speed OS always varies more slowly than the desired speed DS. Following any variation in the transmission ratio, the value of the current speed CS of the vehicle 1 is always assigned to the objective speed OS.

The estimate of the resistant load at the wheels is carried out by an estimation block 20 which initially calculates the speed of the variation of the resistant load at the wheels by means of an asymptotic estimate based on a state observer as a function of the drive torque currently supplied by the engine 3, the speed of rotation of an input shaft of the gear change 8, the current speed CS of the vehicle 1 and the current transmission ratio; the estimate of the resistant load at the wheels is calculated as an integration over time of the speed of variation over time of the estimate of the resistant load at the wheels. It is important to note that the main non-linearities of the elastic characteristic of the transmission are included in a model used in the synthesis of the observer.

The time evolution of the objective speed OS is transmitted from the simulation block 19 to a control block 21 which calculates a time evolution of an objective torque OT at the wheels in order to match the time evolution of the objective speed OS; the objective torque OT at the wheels is then used to control the internal combustion engine 3.

The time evolution of the objective torque OT at the wheels is calculated as a function of the time evolution of the objective speed OS, the current speed CS of the vehicle 1, the current transmission ratio, the estimate of the resistant load at the wheels, the minimum torque that can be actuated at the drive wheels 5 and the maximum torque that can be actuated at the drive wheels 5.

The time evolution of the objective torque OT at the wheels is transmitted from the control block 21 to a coordinator 22 of the torque requests at the wheels, which generates a required torque value RT at the wheels which is used directly to control the internal combustion engine 3. It is preferable for the required torque value RT at the wheels always to be limited to a range between the minimum and maximum torque that can be actuated at the drive wheels 5.

The coordinator 22 of the torque requests at the wheels receives as input the time evolution of the objective torque OT at the wheels from the control block 21, a time evolution of a stabilising torque ST from a traction and stability control system 23 and a time evolution of a damping torque DT from a damping system 24.

The stabilising torque ST is accompanied by a datum indicating the operation to increase or decrease the drive torque; if a decrease is requested, the minimum value between the objective torque OT at the wheels and the stabilising torque ST is taken into account, while if an increase is requested, the maximum value between the objective torque OT at the wheels and the stabilising torque ST is taken into account.

The damping torque DT is added algebraically to the objective torque OT at the wheels if the traction and stability control is not active, i.e. if the stabilising torque ST does not assume significant values; both the damping torque DT and the objective torque OT at the wheels may be positive or negative. The objective torque OT at the wheels in particular assumes negative values when a deceleration of the vehicle 1 is requested, for instance because the current speed CS is greater than the objective speed OS; in this case, the negative value of the objective torque OT at the wheels is translated into an engine brake action and, if necessary, into a shift down from the gear engaged in the gear change 8.

The traction and stability control system 23 calculates the stabilising torque ST needed to ensure the safety of the vehicle 1 in critical conditions and in particular when the drive wheels lose adherence and when the stability of the vehicle 1 is precarious (for instance when it is at risk of swinging round). The purpose of the stabilising torque ST is to cancel out or limit the skidding of the front drive wheels 5 and/or to reset the stability of the vehicle 1; in order to ensure that the action of the traction and stability control system 23 is as efficient as possible, the stabilising torque ST always takes priority over the damping torque DT and the objective torque OT. In particular, if the stabilising torque ST assumes significant values, the coordinator 22 then disregards the damping torque DT.

In order to reduce production costs and obtain adequate mechanical strength, the transmission 6 is not normally subject to much damping; the function of the damping torque DT is to impose a controlled damping on the transmission 6 which is much greater than the natural damping of the transmission 6 itself. In this way, the degree of comfort perceived by the driver of the vehicle 1 is substantially increased as the longitudinal acceleration of the vehicle 1 is damped, i.e. it is free or almost free from oscillation phenomena, both when the transmission ratio is fixed and during the steps of transmission ratio change and starting.

The time evolution of the damping torque DT is calculated by the damping system 24 so as to minimise oscillation phenomena in the transmission 6 of the vehicle 1. In particular, the damping system 24 calculates the time evolution of the damping torque 24 by multiplying a speed of variation over time of a torsion angle of the transmission 6 by a negative coefficient depending on the value of this torsion angle.

The value of the torsion angle of the transmission 6 and the value of the speed of variation over time of this torsion angle are estimated by the estimation block 20. The speed of variation over time of the torsion angle of the transmission 6 is calculated by means of an asymptotic estimate base on an state observer as a function of the drive torque currently supplied by the engine 3, the speed of rotation of an input shaft of the gear change 8, the current speed CS of the vehicle 1, and the current transmission ratio; the torsion angle of the transmission 6 is calculated as an integration over time of the speed of variation over time of this torsion angle. The main non-linearities of the elastic characteristic of the transmission 6 are included in a model used in the synthesis of the observer.

The required torque value RT at the wheels is supplied by the coordinator 22 of the torque requests at the wheels and a coordinator 25 of the engine 3/transmission 6 unit which calculates an objective transmission ratio and thus a required torque value TT at the input of the gear change 8. In particular, the coordinator 25 of the engine 3/transmission 6 unit initially calculates the transmission ratio to be applied, so that the torque at the drive wheels 5 can be achieved with as much precision as possible; subsequently, as the objective transmission ratio is known, the coordinator 25 of the engine 3/transmission 6 unit calculates the required torque value TT at the input of the gear change 8.

A constraint that is imposed on the calculation of the transmission ratio is that of continuation for a minimum time so as to avoid any undesired changes of ratio or changes of ratio that are too close together. In other words, the coordinator 25 of the engine 3/transmission 6 ratio acts in such a way as to maintain the gear currently engaged for a time not lower than a predetermined minimum value (which may be varied as a function of driving style).

The required torque value TT at the input of the gear change 8 is supplied by the coordinator 25 of the engine 3/transmission 6 unit to a coordinator 26 of the drive torque requests which generates as output a control signal for the control of the actuators which regulate the generation of the drive torque of the internal combustion engine 3. The control signal generated by the coordinator 26 of the drive torque requests is formed by a first value which indicates the control value of the instantaneous torque and is used to control the actuators which have a fast effect on the drive torque generation, and a second value which indicates the control value of the predicted torque and is used to control the actuators which have a slow effect on the drive torque generation.

The objective transmission ratio is supplied to a controller 27 of the gear change 8 which uses this signal to calculate the actual transmission ratio. According to the embodiment shown in Fig. 2, the objective transmission ratio is also supplied to the screen 16 so as to display this information. This display method may take place both when the gear change 8 operates automatically, and when the gear change 8 operates manually. In this latter case, the information is a suggestion to the driver,

According to a different embodiment (not shown), the required torque value RT at the wheels is supplied by the coordinator 22 of the torque requests at the wheels directly to the coordinator 26 of the drive torque requests; this embodiment is used when the gear change 8 is manually controlled.

According to different embodiment (not shown), the internal combustion engine 3 is replaced by an equivalent reversible electric motor.

According to a further embodiment, the vehicle 1 is also provided with at least one reversible electric motor 28 which may operate in combination with or as an alternative to the internal combustion engine 3. The shaft of the electric motor 28 may be mechanically connected to the gear change 8 either directly or via its own clutch, or the shaft of the electric motor 28 may be directly mechanically connected to the front drive wheels 5. In this case, the coordinator 25 of the engine 3/transmission 6 unit distributes the required torque value RT at the input of the gear change 8 between the internal combustion engine 3 and the electric motor 28. The following data are taken into account for the purposes of this distribution:
the current speed of rotation of the internal combustion engine 3;
the state of combustion of the internal combustion engine 3 (i.e. whether combustion is or is not active),
the load measurement of the internal combustion engine 3 (for instance the pressure or intake flow),
the speed of rotation of the electric motor 28,
the state of actuation of the electric motor 28 (i.e. whether the power actuation of the electric motor 28 is on or off),
a load measurement of the electric motor 28 (for instance the current absorbed by the power actuation of the electric motor 28),
the torque currently supplied by the internal combustion engine 3,
the minimum torque that can be supplied by the internal combustion engine 3,
the maximum torque that can be supplied by the internal combustion engine 3,
the torque currently supplied by the electric motor 28,
the minimum torque that can be supplied by the electric motor 28,
the maximum torque that can be supplied by the electric motor 28.

The distribution logic of the required torque value RT at the input of the gear change 8 may have the purpose of causing each engine to work in the dynamic conditions that are best suited to the type of engine in order to optimise efficiency and thus minimise consumption. Typically, the internal combustion engine 3 is piloted with a torque objective with varies with a relatively limited gradient, while the electric motor 28 is piloted with a torque objective which varies rapidly. In other words, the coordinator 25 of the engine 3/transmission 6 unit separates the dynamics of the internal combustion engine 3 from the dynamics of the electric motor 28. In this way, each engine may always pursue its own objective in the best possible way in relation to its own dynamic capacities.

As an alternative, the distribution logic of the required torque value RT at the input of the gear change 8 may give priority to the use of the electric motor 28 and limit the use of the internal combustion engine 3 only to cases of absolute necessity in order to minimise the pollutant emissions generated by the vehicle 1 (typically during travel in urban areas with limited traffic).

As shown in dashed lines in Fig. 2, in the case of malfunction of the control chain described above, provision is made for emergency operation in which the drive torque generated by the internal combustion engine 3 of the vehicle 1 is controlled directly as a function of the position of the accelerator pedal 11. In other words, the time evolution of the objective torque OT at the wheels is calculated solely and directly as a function of the position of the accelerator pedal 11, substantially as is already the case in vehicles that are currently commercially available.

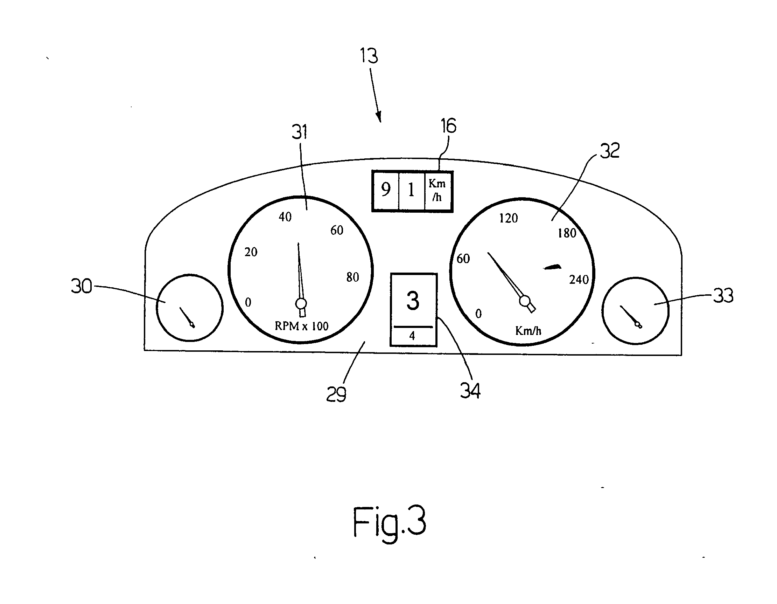

Fig. 3 shows a possible embodiment of the dashboard 13 which comprises a flat panel 29 disposed facing the driver behind the steering wheel 10 and bearing four analogue instruments. These four analogue instruments are in particular a fuel level indicator 30, a revolution counter 31, a tachymeter 32 and a thermometer 33 of the temperature of a cooling fluid of the internal combustion engine 3. The panel 29 further bears the screen 16 (in particular an LCD screen) indicating the desired speed DS and a further screen 34 (in particular an LCD screen) which indicates the gear currently engaged in the gear change 8 in an upper zone and indicates a suggested gear for the gear change 8 in a lower zone. The screen 16 and the screen 34 are disposed in vertical alignment so that they are one above the other. The screen 16 and the screen 34 are also disposed between the revolution counter 31 and the tachymeter 32.

The cruise management method and device described above have a number of advantages, as they make it possible correctly to interpret, in every situation, the wishes in terms of the speed of the vehicle 1 that the driver expresses by acting on the accelerator pedal 11 and on the brake pedal 12. Moreover, the driver is adequately assisted and informed through the display both of the real speed via the tachymeter 32 and of the desired speed DS via the screen 16. It is important to note that as a result of the display of the desired speed DS, driving of the vehicle 1 is simpler and more pleasant. Moreover, the possibility of inadvertently exceeding statutory speed limits is substantially reduced.

The cruise management method and device described above make it possible to optimise the choice of transmission ratio in automatic operation of the gear change 8 in any situation and in particular whatever the extent of the vehicle load due to the road gradient, wind or variations of the vehicle mass (generated, for instance, by different numbers of passengers, or changes of the load housed in the boot or the load disposed on the roof).

## Claims

1. A cruise management method for a road vehicle (1), which method comprises the steps of:
detecting the position of an accelerator control (11),
detecting a current speed (CS) of the vehicle (1),
detecting a current transmission ratio,
determining a desired speed (DS) by interpreting what speed of forward movement of the vehicle (1) the driver is trying to achieve as a function of the position of the accelerator control (11), the current speed (CS) of the vehicle (1) and the current transmission ratio; wherein the desired speed (DS) is calculated by algebraically combining the current speed (CS) with a correction factor determined as a function of the position of the accelerator control (11) and the current transmission ratio; and
using the desired speed (DS) to control the drive torque generated by at least one engine (3) of the vehicle (1);
the method is **characterised in that** the step of using the desired speed (DS) to control the drive torque generated by the engine (3) of the vehicle (1) comprises the subsequent steps of:
calculating, using a dynamic model of the vehicle (1), a time evolution of an objective speed (OS) in order to bring the current speed (CS) in line with the desired speed (DS);
calculating a time evolution of an objective torque (OT) at the wheels to match the time evolution of the objective speed (OS); and
controlling the engine (3) of the vehicle (1) to match the time evolution of the objective torque (OT) at the wheels.

2. A method as claimed in claim 1, wherein the desired speed (DS) is displayed by means of a specific display instrument (16) disposed in a dashboard (13) of the vehicle (1).

3. A method as claimed in claim 2, wherein the desired speed (DS), before being displayed by the display instrument (16), is filtered by filtering of the low-pass type.

4. A method as claimed in claim 1, 2 or 3, wherein the position of a brake control (12) is determined, the desired speed (DS) also being calculated as a function of the position of the brake control (12).

5. A method as claimed in one of claims 1 to 4, wherein a speed set by a cruise control device (15) is determined, the desired speed (DS) also being calculated as a function of the speed set by the cruise control device (15).

6. A method as claimed in claim 5, wherein the desired speed (DS) is taken to be equal to the maximum value among the speed set by the cruise control device (15) and the speed as calculated as a function of the accelerator control (11), the current speed (CS) of the vehicle (1) and the current transmission ratio.

7. A method as claimed in one of claims 1 to 6, wherein the time evolution of the objective speed (OS) is calculated using a dynamic model of the vehicle (1) which represents only the longitudinal movement of the vehicle (1) and receives as input the desired speed (DS), the current speed (CS) of the vehicle (1), the current transmission ratio and the estimate of the resistant load at the wheels.

8. A method as claimed in claim 7, wherein the dynamic model of the vehicle (1) also receives as input the minimum torque that can be actuated at the wheels of the vehicle (1) and the maximum torque that can be actuated at the wheels of the vehicle (1).

9. A method as claimed in claim 7 or 8, wherein the speed of variation of the resistant load at the wheels is calculated by an asymptotic estimate based on a state observer as a function of the drive torque currently supplied by the engine (3), the speed of rotation of an input shaft of a gear change (8), the current speed (CS) of the vehicle (1) and the current transmission ratio, the estimate of the resistant load at the wheels being calculated as an integration over time of the speed of variation over time of the estimate of the resistant load at the wheels.

10. A method as claimed in claim 9, wherein the main non-linearities of the elastic characteristic of a transmission (6) of the vehicle (1) are included in a model used in the synthesis of the observer.

11. A method as claimed in one of claims 1 to 10, wherein it is imposed that the objective speed (OS) always varies coherently with the variation of the desired speed (DS) so that when the desired speed (DS) is increasing, the objective speed (OS) is also increasing and when the desired speed (DS) is decreasing, the objective speed (OS) is also decreasing.

12. A method as claimed in one of claims 1 to 11, wherein it is imposed that the objective speed (OS) always varies more slowly than the desired speed (DS).

13. A method as claimed in one of claims 1 to 12, wherein, following every variation of the transmission ratio, the value of the current speed (CS) of the vehicle (1) is always assigned to the objective speed (OS).

14. A method as claimed in one of claims 1 to 13, wherein the time evolution of the objective torque (OT) at the wheels is calculated as a function of the time evolution of the objective speed (OS), the current speed (CS) of the vehicle (1), the current transmission ratio and the estimate of the resistant load at the wheels.

15. A method as claimed in claim 14, wherein the speed of variation of the resistant load at the wheels is calculated by an asymptotic estimate based on a state observer as a function of the drive torque currently supplied by the engine (3), the speed of rotation of an input shaft of a gear change (8), the current speed (CS) of the vehicle (1) and the current transmission ratio, the estimate of the resistant load at the wheels being calculated as an integration over time of the speed of variation over time of the estimate of the resistant load at the wheels.

16. A method as claimed in claim 15, wherein the main non-linearities of the elastic characteristic of a transmission (6) of the vehicle (1) are included in a model used in the synthesis of the observer.

17. A method as claimed in claim 14, 15 or 16, wherein the time evolution of the objective torque (OT) at the wheels is also calculated as a function of the minimum torque that can be actuated at the wheels of the vehicle (1) and the maximum torque that can be actuated at the wheels of the vehicle (1).

18. A method as claimed in one of claims 1 to 17, wherein the time evolution of the objective torque (OT) at the wheels is supplied to a coordinator (22) of the torque requests at the wheels, which generates a required torque value (RT) at the wheels which is used to control the engine (3) of the vehicle (1).

19. A method as claimed in claim 18, wherein a time evolution of a damping torque (DT) is calculated in order to minimise oscillation phenomena in a transmission (6) of the vehicle (1), the time evolution of the damping torque (DT) being supplied to the coordinator (22) of the torque requests at the wheels in order to be added algebraically to the time evolution of the objective torque (OT) at the wheels.

20. A method as claimed in claim 19, wherein a torsion angle of the transmission (6) of the vehicle (1) is estimated and a speed of variation over time of the torsion angle of the transmission (6) of the vehicle (1) is estimated, the time evolution of the damping torque (DT) being calculated by multiplying the speed of variation over time of the torsion angle by a negative coefficient depending on the value of the torsion angle.

21. A method as claimed in claim 20, wherein the speed of variation over time of the torsion angle is calculated by an asymptotic estimate based on a state observer as a function of the drive torque currently supplied by the engine (3), the speed of rotation of an input shaft of a gear change (8), the current speed (CS) of the vehicle (1) and the current transmission ratio, the torsion angle of the transmission (6) of the vehicle (1) being calculated as an integration over time of the speed of variation over time of the torsion angle.

22. A method as claimed in claim 21, wherein the main non-linearities of the elastic characteristic of a transmission (6) of the vehicle (1) are included in a model used in the synthesis of the observer.

23. A method as claimed in claim 20, 21 or 22, wherein a traction and stability control system generates a time evolution of a stabilising torque (ST) which is supplied to the coordinator (22) of the torque requests at the wheels in order to be combined with the time evolution of the objective torque (OT) at the wheels.

24. A method as claimed in claim 23, wherein, if the stabilising torque (ST) assumes significant values, the coordinator (22) of the torque requests at the wheels disregards the damping torque (DT).

25. A method as claimed in one of claims 18 to 24, wherein the required torque value (RT) at the wheels is supplied to a coordinator (26) of the drive torque requests, which generates as output a control signal for the control of the actuators which regulate the generation of the drive torque of the engine (3).

26. A method as claimed in one of claims 18 to 24, wherein the required torque value (RT) at the wheels is supplied to a coordinator (25) of the engine (3)/transmission (6) unit which calculates a required torque value (TT) at the input of a gear change (8) and an objective transmission ratio.

27. A method as claimed in claim 26, wherein the required torque value (RT) at the input of the gear change (8) is supplied to a coordinator (26) of the drive torque requests, which generates as output a control signal for the control of the actuators which regulate the generation of the drive torque of the engine (3).

28. A method as claimed in claim 27, wherein the control signal generated by the coordinator (26) of the drive torque requests is formed by a first value which indicates the control value of the instantaneous torque and is used to control the actuators which have a fast effect on the generation of drive torque, and a second value which indicates the control value of the predicted torque and is used to control the actuators which have a slow effect on the generation of drive torque.

29. A method as claimed in claim 26, wherein a plurality of engines (3, 28) are provided, between which the required torque value (RT) at the input of the gear change (8) is distributed.

30. A method as claimed in claim 29, wherein the required torque value (RT) at the input of the gear change (8) is distributed between the engines (3, 28), separating the dynamics of these engines (3, 28).

31. A method as claimed one of claims 1 to 30, wherein, in an emergency situation, the drive torque generated by the engine (3) of the vehicle (1) is controlled directly as a function of the position of the accelerator control (11).

## Patentansprüche

1. Verfahren zur Geschwindigkeitsregelung für ein Straßenfahrzeug (1), wobei das Verfahren die Schritte umfasst:
Erfassen der Position eines Gaspedals (11),
Erfassen einer Istgeschwindigkeit (CS) des Fahrzeugs (1),
Erfassen eines momentanen Übersetzungsverhältnisses,
Bestimmen einer Sollgeschwindigkeit (DS), indem interpretiert wird, welche Geschwindigkeit einer Vorwärtsbewegung des Fahrzeugs (1) der Fahrer zu erreichen versucht, und zwar in Abhängigkeit von der Position des Gaspedals (11), der Istgeschwindigkeit (CS) des Fahrzeugs (1) und dem momentanen Übersetzungsverhältnis; wobei die Sollgeschwindigkeit (DS) berechnet wird, indem die Istgeschwindigkeit (CS) algebraisch mit einem Korrekturfaktor kombiniert wird, der in Abhängigkeit von der Position des Gaspedals (11) und des momentanen Übersetzungsverhältnisses bestimmt wird; und
Verwenden der Sollgeschwindigkeit (DS), um das Antriebsmoment zu steuern, das durch wenigstens einen Motor (3) des Fahrzeugs (1) erzeugt wird;
wobei das Verfahren **dadurch gekennzeichnet ist, dass** der Schritt des Verwendens der Sollgeschwindigkeit (DS), um das Antriebsmoment zu steuern, das durch den Motor (3) des Fahrzeugs (1) erzeugt wird, die nachfolgenden Schritte umfasst:
Berechnen einer Zeitentwicklung einer Zielgeschwindigkeit (OS) unter Verwendung eines dynamischen Modells des Fahrzeugs (1), um die Istgeschwindigkeit (CS) mit der Sollgeschwindigkeit (DS) in Übereinstimmung zu bringen;
Berechnen einer Zeitentwicklung eines Ziel-Drehmoments (OT) an den Rädern, um die Zeitentwicklung der Zielgeschwindigkeit (OS) anzupassen; und
Steuern des Motors (3) des Fahrzeugs (1), um die Zeitentwicklung des Ziel-Drehmoments (OT) an den Rädern anzupassen.

2. Verfahren nach Anspruch 1, in welchem die Sollgeschwindigkeit (DS) mittels eines speziellen Anzeigeinstruments (16) angezeigt wird, das in einer Armaturentafel (13) des Fahrzeugs (1) angeordnet ist.

3. Verfahren nach Anspruch 2, in welchem die Sollgeschwindigkeit (DS) durch eine Tiefpassfilterung gefiltert wird, bevor sie durch das Anzeigeinstrument (16) angezeigt wird.

4. Verfahren nach Anspruch 1, 2 oder 3, in welchem die Position eines Bremspedals (12) bestimmt wird, wobei die Sollgeschwindigkeit (DS) auch in Abhängigkeit von der Position des Bremspedals (12) berechnet wird.

5. Verfahren nach einem der Ansprüche 1 bis 4, in welchem eine durch eine Geschwindigkeitsregelungseinrichtung (15) eingestellte Geschwindigkeit bestimmt wird, wobei die Sollgeschwindigkeit (DS) auch in Abhängigkeit von der durch die Geschwindigkeitsregelungseinrichtung (15) eingestellte Geschwindigkeit berechnet wird.

6. Verfahren nach Anspruch 5, in welchem die Sollgeschwindigkeit (DS) gleich dem maximalen Wert unter der durch die Geschwindigkeitsregelungseinrichtung (15) eingestellten Geschwindigkeit und der in Abhängigkeit von dem Gaspedal (11) berechneten Geschwindigkeit, der Istgeschwindigkeit (CS) des Fahrzeugs (1) und dem momentanen Übertragungsverhältnis übernommen wird.

7. Verfahren nach einem der Ansprüche 1 bis 6, in welchem die Zeitentwicklung der Zielgeschwindigkeit (OS) unter Verwendung eines dynamischen Modells des Fahrzeugs (1) berechnet wird, welches nur die Längsbewegung des Fahrzeugs (1) repräsentiert und als Eingabe die Sollgeschwindigkeit (DS), die Istgeschwindigkeit (CS) des Fahrzeugs (1), das momentane Übertragungsverhältnis und der Schätzung der Widerstandslast an den Rädern erhält.

8. Verfahren nach Anspruch 7, in welchem das dynamische Modell des Fahrzeugs (1) auch als Eingabe erhält das minimale Drehmoment, das an den Rädern des Fahrzeugs (1) ausgelöst werden kann, und das maximale Drehmoment, das an den Rädern des Fahrzeugs (1) ausgelöst werden kann.

9. Verfahren nach Anspruch 7 oder 8, in welchem die Variationsgeschwindigkeit der Widerstandslast an den Rädern durch eine asymptotische Abschätzung berechnet wird, basierend auf einem Zustandsbeobachter in Abhängigkeit von dem Antriebsmoment, das momentan durch den Motor (3) geliefert wird, der Drehgeschwindigkeit einer Eingangswelle einer Gangschaltung (8), der Istgeschwindigkeit (CS) des Fahrzeugs (1) und des momentanen Übertragungsverhältnisses, wobei die Abschätzung der Widerstandslast an den Rädern als eine Integration über die Zeit der Variationsgeschwindigkeit über die Zeit der Abschätzung der Widerstandslast an den Rädern berechnet wird.

10. Verfahren nach Anspruch 9, in welchem die Haupt-Nichtlinearitäten der Elastizitätscharakteristik eines Getriebes (6) des Fahrzeugs (1) in einem Modell enthalten sind, das bei der Synthese des Beobachters verwendet wird.

11. Verfahren nach einem der Ansprüche 1 bis 10, in welchem erzwungen wird, dass die Zielgeschwindigkeit (OS) immer kohärent mit der Variation der Sollgeschwindigkeit (DS) variiert, so dass, wenn die Sollgeschwindigkeit (DS) ansteigt, die Zielgeschwindigkeit (OS) auch ansteigt und wenn die Sollgeschwindigkeit (DS) abnimmt, die Zielgeschwindigkeit (OS) auch abnimmt.

12. Verfahren nach einem der Ansprüche 1 bis 11, in welchem auferzwungen wird, dass sich die Zielgeschwindigkeit (OS) immer langsamer verändert als die Sollgeschwindigkeit (DS).

13. Verfahren nach einem der Ansprüche 1 bis 12, in welchem nach jeder Variation des Übertragungsverhältnisses der Wert der Istgeschwindigkeit (CS) des Fahrzeugs (1) immer der Zielgeschwindigkeit (OS) zugewiesen wird.

14. Verfahren nach einem der Ansprüche 1 bis 13, in welchem die Zeitentwicklung des Ziel-Drehmoments (OT) an den Rädern berechnet wird in Abhängigkeit von der Zeitentwicklung der Zielgeschwindigkeit (OS), der Istgeschwindigkeit (CS) des Fahrzeugs (1), des gegenwärtigen Übertragungsverhältnisses und der Abschätzung der Widerstandslast an den Rädern.

15. Verfahren nach Anspruch 14, in welchem die Variationsgeschwindigkeit der Widerstandslast an den Rädern berechnet wird durch eine asymptotische Abschätzung basierend auf einen Zustandbeobachter in Abhängigkeit von dem Antriebsmoment, das gegenwärtig durch den Motor (3) geliefert wird, der Drehgeschwindigkeit einer Eingangswelle einer Gangschaltung (8), der Istgeschwindigkeit (CS) des Fahrzeugs (1) und des momentanen Übertragungsverhältnisses, wobei die Abschätzung der Widerstandslast an den Rädern berechnet wird als eine Integration über die Zeit der Variationsgeschwindigkeit über die Zeit der Abschätzung der Widerstandslast an den Rädern.

16. Verfahren nach Anspruch 15, in welchem die Haupt-Nichtlinearitäten der Elastizitätscharakteristik eines Getriebes (6) des Fahrzeugs (1) in einem Modell enthalten sind, das bei der Synthese des Beobachters verwendet wird.

17. Verfahren nach Anspruch 14, 15 oder 16, in welchem die Zeitentwicklung des Ziel-Drehmoments (OT) an den Rädern auch in Abhängigkeit von dem minimalen Drehmoment berechnet wird, das an den Rädern des Fahrzeugs (1) ausgelöst werden kann, und dem maximalen Drehmoment, das an den Rädern des Fahrzeugs (1) ausgelöst werden kann.

18. Verfahren nach einem der Ansprüche 1 bis 17, in welchem die Zeitentwicklung des Ziel-Drehmoments (OT) an den Rädern einem Koordinator (22) der Drehmoment-Anforderungen an den Rädern zugeführt wird, welcher einen geforderten Drehmomentwert (RT) an den Rädern erzeugt, der dazu verwendet wird, den Motor (3) des Fahrzeugs (1) zu steuern.

19. Verfahren nach Anspruch 18, in welchem eine Zeitentwicklung eines Dämpfungsmoments (DT) berechnet wird, um Schwingungsphänomene in einem Getriebe (6) des Fahrzeugs (1) zu minimieren, wobei die Zeitentwicklung des Dämpfungsmoments (DT) dem Koordinator (22) der Drehmoment-Anforderungen an den Rädern zugeführt wird, um algebraisch der Zeitentwicklung des Ziel-Drehmoments (OT) an den Rädern hinzugefügt zu werden.

20. Verfahren nach Anspruch 19, in welchem ein Drillwinkel des Getriebes (6) des Fahrzeugs (1) abgeschätzt wird und eine Variationsgeschwindigkeit über die Zeit des Drillwinkels des Getriebes (6) des Fahrzeugs (1) abgeschätzt wird, wobei die Zeitentwicklung des Dämpfungsmoments (DT) berechnet wird, indem die Variationsgeschwindigkeit über die Zeit des Drillwinkels mit einem negativen Koeffizienten multipliziert wird, der von dem Wert des Drillwinkels abhängt.

21. Verfahren nach Anspruch 20, in welchem die Variationsgeschwindigkeit über die Zeit des Drillwinkels durch eine asymptotische Abschätzung basierend auf einem Zustandsbeobachter berechnet wird, und zwar in Abhängigkeit von dem Antriebsmoment, das momentan durch den Motor (3) geliefert wird, die Drehgeschwindigkeit einer Eingangswelle einer Gangschaltung (8), der Istgeschwindigkeit (CS) des Fahrzeugs (1) und dem momentanen Übertragungsverhältnis, wobei der Drillwinkels des Getriebes (6) des Fahrzeugs (1) als eine Integration über die Zeit der Variationsgeschwindigkeit über die Zeit des Drillwinkels berechnet wird.

22. Verfahren nach Anspruch 21, in welchem die Haupt-Nichtlinearitäten der Elastizitätscharakteristik eines Getriebes (6) des Fahrzeugs (1) in einem Modell enthalten sind, das bei der Synthese des Beobachters verwendet wird.

23. Verfahren nach Anspruch 20, 21 oder 22, in welchem ein Traktions- und Stabilitäts-Kontrollsystem eine Zeitentwicklung eines Stabilisierungsmoments (ST) erzeugt, welche dem Koordinator (22) der Drehmoment-Anforderungen an den Rädern zugeführt wird, um mit der Zeitentwicklung des Ziel-Drehmoments (OT) an den Rädern kombiniert zu werden.

24. Verfahren nach Anspruch 23, in welchem der Koordinator (22) der Drehmoment-Anforderungen an den Rädern das Dämpfungsmoment (DT) unbeachtet lässt, wenn das Stabilisierungsmoment (ST) signifikante Werte annimmt.

25. Verfahren nach einem der Ansprüche 18 bis 24, in welchem der geforderte Drehmomentwert (RT) an den Rädern dem Koordinator (26) der Antriebsmoment-Anforderungen zugeführt wird, welcher als Ausgabe ein Steuersignal für die Steuerung der Aktuatoren erzeugt, welche die Erzeugung des Antriebsmoments des Motors (3) regulieren.

26. Verfahren nach einem der Ansprüche 18 bis 24, in welchem der geforderte Drehmomentwert (RT) an den Rädern einem Koordinator (25) der Motor (3)/Getriebe (6)-Einheit zugeführt wird, welche einen geforderten Drehmomentwert (TT) am Eingang einer Gangschaltung (8) und ein Ziel-Übertragungsverhältnis berechnet.

27. Verfahren nach Anspruch 26, in welchem der geforderte Drehmomentwert (RT) am Eingang der Gangschaltung (8) einem Koordinator (26) der Antriebsmoment-Anforderungen zugeführt wird, welcher als Ausgabe eines Steuersignals zur Steuerung der Aktuatoren erzeugt, welche die Erzeugung des Antriebsmoments des Motors (3) regulieren.

28. Verfahren nach Anspruch 27, in welchem das durch den Koordinator (26) der Antriebsmoment-Anforderungen erzeugte Steuersignal durch einen ersten Wert gebildet wird, welcher den Steuerwert des momentanen Drehmoments angibt und dazu verwendet wird, die Aktuatoren zu steuern, welche einen schnellen Einfluss auf die Erzeugung des Antriebsmoments haben, und einen zweiten Wert, welcher den Steuerwert des vorhergesagten Drehmoments angibt und dazu verwendet wird, die Aktuatoren zu steuern, welche einen geringen Einfluss auf die Erzeugung des Drehmoments haben.

29. Verfahren nach Anspruch 26, in welchem eine Mehrzahl von Motoren (3, 28) vorgesehen sind, zwischen welchen der geforderte Drehmomentwert (RT) am Eingang der Gangschaltung (8) aufgeteilt wird.

30. Verfahren nach Anspruch 29, in welchem der geforderte Drehmomentwert (RT) am Eingang der Gangschaltung (8) zwischen den Motoren (3, 28) aufgeteilt wird und das Kräftespiel dieser Motoren (3, 28) unterteilt.

31. Verfahren nach einem der Ansprüche 1 bis 30, in welchem in einer Notfallsituation das durch den Motor (3) des Fahrzeugs (1) erzeugte Antriebsmoment direkt in Abhängigkeit von der Position des Gaspedals (11) gesteuert wird.

## Revendications

1. Procédé de régulation de vitesse pour un véhicule terrestre (1), lequel procédé comprend les étapes consistant à :
détecter la position d'une commande d'accélérateur (11),
détecter une vitesse actuelle (CS) du véhicule (1),
déterminer un rapport de transmission actuel,
déterminer une vitesse souhaitée (DS) en interprétant la vitesse du mouvement en avant du véhicule (1) que le conducteur cherche à atteindre en fonction de la position de la commande d'accélérateur (11), de la vitesse actuelle (CS) du véhicule (1) et du rapport de transmission actuel ; dans lequel la vitesse souhaitée (DS) est calculée en combinant algébriquement la vitesse actuelle (CS) avec un facteur de correction déterminé en fonction de la position de la commande d'accélérateur (11) et du rapport de transmission actuel ; et
utiliser la vitesse souhaitée (DS) pour commander le couple d'entraînement généré par au moins un moteur (3) du véhicule (1) ;
le procédé étant **caractérisé en ce que** l'étape consistant à utiliser la vitesse souhaitée (DS) pour commander le couple d'entraînement généré par le moteur (3) du véhicule (1) comprend les étapes suivantes consistant à :
calculer, à l'aide d'un modèle dynamique du véhicule (1), une évolution temporelle d'une vitesse objectif (OS) afin que la vitesse actuelle (CS) concorde avec la vitesse souhaitée (DS) ;
calculer une évolution temporelle d'un couple objectif (OT) au niveau des roues pour correspondre à l'évolution temporelle de la vitesse objectif (OS) ; et
commander le moteur (3) du véhicule (1) pour correspondre à l'évolution temporelle du couple objectif (OT) au niveau des roues.

2. Procédé selon la revendication 1, dans lequel la vitesse souhaitée (DS) est affichée au moyen d'un instrument d'affichage spécifique (16) agencé dans le tableau de bord (13) du véhicule (1).

3. Procédé selon la revendication 2, dans lequel la vitesse souhaitée (DS), avant d'être affichée par l'instrument d'affichage (16), est filtrée par un filtre de type passe-bas.

4. Procédé selon les revendications 1, 2 ou 3, dans lequel la position d'une commande de freinage (12) est déterminée, la vitesse souhaitée (DS) étant également calculée en fonction de la position de la commande de freinage (12).

5. Procédé selon l'une des revendications 1 à 4, dans lequel une vitesse établie par un dispositif de régulation de vitesse (15) est déterminée, la vitesse souhaitée (DS) étant également calculée en fonction de la vitesse établie par le dispositif de régulation de vitesse (15).

6. Procédé selon la revendication 5, dans lequel la vitesse souhaitée (DS) est choisie pour être égale à la valeur maximale entre la vitesse établie par le dispositif de régulation de vitesse (15) et la vitesse telle que calculée en fonction de la commande d'accélérateur (11), de la vitesse actuelle (CS) du véhicule (1) et du rapport de transmission actuel.

7. Procédé selon l'une des revendications 1 à 6, dans lequel l'évolution temporelle de la vitesse objectif (OS) est calculée en utilisant un modèle dynamique du véhicule (1) qui représente uniquement le mouvement longitudinal du véhicule (1) et reçoit comme entrée la vitesse souhaitée (DS), la vitesse actuelle (CS) du véhicule (1), le rapport de transmission actuel et l'estimation de la charge résistante au niveau des roues.

8. Procédé selon la revendication 7, dans lequel le modèle dynamique du véhicule (1) reçoit également comme entrée le couple minimum qui peut être appliqué au niveau des roues du véhicule (1) et le couple maximum qui peut être appliqué au niveau des roues du véhicule (1).

9. Procédé selon l'une des revendications 7 ou 8, dans lequel la vitesse de variation de la charge résistante au niveau des roues est calculée par une estimation asymptotique basée sur un observateur d'état en fonction du couple d'entraînement actuellement fourni par le moteur (3), de la vitesse de rotation d'un arbre d'entrée d'un changement de vitesse (8), de la vitesse actuelle (CS) du véhicule (1) et du rapport de transmission actuel, l'estimation de la charge résistante au niveau des roues se calculant, en intégrant dans le temps, la vitesse de variation dans le temps de l'estimation de la charge résistante au niveau des roues.

10. Procédé selon la revendication 9, dans lequel les principales non-linéarités de la caractéristique élastique d'une transmission (6) du véhicule (1) sont comprises dans un modèle utilisé dans la synthèse de l'observateur.

11. Procédé selon l'une des revendications 1 à 10, dans lequel il est imposé que la vitesse objectif (OS) varie toujours en cohérence avec la variation de la vitesse souhaitée (DS), de manière à ce que, lorsque la vitesse souhaitée (DS) augmente, la vitesse objectif (OS) augmente également et lorsque la vitesse souhaitée (DS) diminue, la vitesse objectif (OS) diminue également.

12. Procédé selon l'une des revendications 1 à 11, dans lequel il est imposé que la vitesse objectif (OS) varie toujours plus lentement que la vitesse souhaitée (DS).

13. Procédé selon l'une des revendications 1 à 12, dans lequel, suite à chaque variation du rapport de transmission, la valeur de la vitesse actuelle (CS) du véhicule (1) est toujours attribuée à la vitesse objectif (OS).

14. Procédé selon l'une des revendications 1 à 13, dans lequel l'évolution temporelle du couple objectif (OT) au niveau des roues est calculée en fonction de l'évolution temporelle de la vitesse objectif (OS), de la vitesse actuelle (CS) du véhicule (1), du rapport de transmission actuel et de l'estimation de la charge résistante au niveau des roues.

15. Procédé selon la revendication 14, dans lequel la vitesse de variation de la charge résistante au niveau des roues est calculée par une estimation asymptotique basée sur un observateur d'état en fonction du couple d'entraînement actuellement appliqué par le moteur (3), de la vitesse de rotation d'un arbre d'entrée d'un changement de vitesse (8), de la vitesse actuelle (CS) du véhicule (1) et du rapport de transmission actuel, l'estimation de la charge résistante au niveau des roues se calculant, en intégrant dans le temps, la vitesse de variation dans le temps de l'estimation de la charge résistante au niveau des roues.

16. Procédé selon la revendication 15, dans lequel les principales non-linéarités de la caractéristique élastique d'une transmission (6) du véhicule (1) sont comprises dans un modèle utilisé dans la synthèse de l'observateur.

17. Procédé selon les revendications 14, 15 ou 16, dans lequel l'évolution temporelle du couple objectif (OT) au niveau des roues est également calculée en fonction du couple minimum qui peut être appliqué au niveau des roues du véhicule (1) et du couple maximum qui peut être appliqué au niveau des roues du véhicule (1).

18. Procédé selon l'une des revendications 1 à 17, dans lequel l'évolution temporelle du couple objectif (OT) au niveau des roues est fournie à un coordinateur (22) des consignes de couple au niveau des roues, qui génère une valeur de couple requis (RT) au niveau des roues qui est utilisée pour commander le moteur (3) du véhicule (1).

19. Procédé selon la revendication 18, dans lequel l'évolution temporelle d'un couple d'amortissement (DT) est calculée afin de minimiser les phénomènes d'oscillation dans une transmission (6) du véhicule (1), l'évolution temporelle du couple d'amortissement (DT) étant fournie au coordinateur (22) des consignes de couple au niveau des roues afin d'être ajoutée algébriquement à l'évolution temporelle du couple objectif (OT) au niveau des roues.

20. Procédé selon la revendication 19, dans lequel un angle de torsion de la transmission (6) du véhicule (1) est estimé et une vitesse de variation dans le temps de l'angle de torsion de la transmission (6) du véhicule (1) est estimée, l'évolution temporelle du couple d'amortissement (DT) étant calculée en multipliant la vitesse de variation dans le temps de l'angle de torsion par un coefficient négatif dépendant de la valeur de l'angle de torsion.

21. Procédé selon la revendication 20, dans lequel la vitesse de variation dans le temps de l'angle de torsion est calculée par une estimation asymptotique basée sur un observateur d'état en fonction du couple d'entraînement actuellement fourni par le moteur (3), de la vitesse de rotation d'un arbre d'entrée d'un changement de vitesse (8), de la vitesse actuelle (CS) du véhicule (1) et du rapport de transmission actuel, l'angle de torsion de la transmission (6) du véhicule (1) se calculant, en intégrant dans le temps, la vitesse de variation dans le temps de l'angle de torsion.

22. Procédé selon la revendication 21, dans lequel les principales non-linéarités de la caractéristique élastique d'une transmission (6) du véhicule (1) sont comprises dans un modèle utilisé dans la synthèse de l'observateur.

23. Procédé selon les revendications 20, 21 ou 22, dans lequel un système de commande de la traction et de la stabilité génère une évolution temporelle d'un couple de stabilisation (ST) qui est fournie au coordinateur (22) des consignes de couple au niveau des roues afin d'être combinée à l'évolution temporelle du couple objectif (OT) au niveau des roues.

24. Procédé selon la revendication 23, dans lequel, si le couple de stabilisation (ST) présente des valeurs significatives, le coordinateur (22) des consignes de couple au niveau des roues ne tient pas compte du couple d'amortissement (DT).

25. Procédé selon l'une des revendications 18 à 24, dans lequel la valeur de couple requis (RT) au niveau des roues est fournie à un coordinateur (26) des consignes du couple d'entraînement, qui génère comme sortie un signal de commande pour commander les actionneurs qui régulent la génération du couple d'entraînement du moteur (3).

26. Procédé selon l'une des revendications 18 à 24, dans lequel la valeur de couple requis (RT) au niveau des roues est fournie à un coordinateur (25) du moteur (3) ou de l'unité de transmission (6) qui calcule une valeur de couple requis (TT) à l'entrée d'un changement de vitesse (8) et un rapport de transmission objectif.

27. Procédé selon la revendication 26, dans lequel la valeur de couple requis (RT) à l'entrée du changement de vitesse (8) est fournie à un coordinateur (26) des consignes du couple d'entraînement, qui génère comme sortie un signal de commande pour commander les actionneurs qui régulent la génération du couple d'entraînement du moteur (3).

28. Procédé selon la revendication 27, dans lequel le signal de commande généré par le coordinateur (26) des consignes du couple d'entraînement est formé par une première valeur qui indique la valeur de commande du couple instantané et qui est utilisée pour commander les actionneurs qui ont un effet rapide sur la génération du couple d'entraînement, et une seconde valeur qui indique la valeur de commande du couple prévu et qui est utilisée pour commander les actionneurs qui ont un effet lent sur la génération du couple d'entraînement.

29. Procédé selon la revendication 26, dans lequel une pluralité de moteurs (3, 28) sont fournis, entre lesquels la valeur de couple requis (RT) à l'entrée du changement de vitesse (8) est répartie.

30. Procédé selon la revendication 29, dans lequel la valeur de couple requis (RT) à l'entrée du changement de vitesse (8) est répartie entre les moteurs (3, 28), séparant la dynamique de ces moteurs (3, 28).

31. Procédé selon l'une des revendications 1 à 30, dans lequel, dans une situation d'urgence, le couple d'entraînement généré par le moteur (3) du véhicule (1) est commandé directement en fonction de la position de la commande d'accélérateur (11).
